(19) **Europäisches Patentamt**

**European Patent Office**

**Office européen des brevets**

(11) **EP 1 245 812 B1**

(12) **EUROPEAN PATENT SPECIFICATION**

(45) Date of publication and mention
of the grant of the patent:
**04.10.2006 Bulletin 2006/40**

(51) Int Cl.:
*F02D 41/22* (2006.01)     *F02D 41/06* (2006.01)

(21) Application number: **02007017.3**

(22) Date of filing: **27.03.2002**

(54) **Abnormality detection apparatus of pressure sensor**

Gerät zum Bestimmen von Fehlern eines Drucksensors

Appareil de détection d'anomalies d'un capteur de pression

(84) Designated Contracting States:
**DE ES FR GB IT**

(30) Priority: **28.03.2001 JP 2001093019**

(43) Date of publication of application:
**02.10.2002 Bulletin 2002/40**

(73) Proprietor: **Toyota Jidosha Kabushiki Kaisha
Toyota-shi, Aichi-ken, 471-8571 (JP)**

(72) Inventor: **Morikawa, Atsushi
Toyota-shi,
Aichi-ken 471-8571 (JP)**

(74) Representative: **TBK-Patent
Bavariaring 4-6
80336 München (DE)**

(56) References cited:
**EP-A- 0 581 151          EP-A- 0 894 963
DE-A1- 4 032 451          DE-A1- 19 745 698
DE-C1- 10 021 639**

• **PATENT ABSTRACTS OF JAPAN vol. 018, no. 360
(M-1634), 7 July 1994 (1994-07-07) & JP 06 093922
A (NIPPONDENSO CO LTD), 5 April 1994
(1994-04-05)**

**Description**

The present invention relates to an abnormality detection apparatus for detecting an abnormality of a pressure sensor, more particularly to an abnormality detection apparatus for detecting abnormalities of a plurality of pressure sensors which detect a plurality of air pressures related to a running state of an engine.

Control parameter of a fuel injection amount in a vehicular engine include pressures of air related to running of an engine, such as a suction pressure and an atmospheric pressure. The suction pressure and the atmospheric pressure are detected by pressure sensors such as a suction pressure sensor and an atmospheric pressure sensor.

A trouble diagnosis method of a conventional pressure sensor is disclosed, for example, in Japanese Unexamined Patent Publication No. Hei 6-93922. In this method, a fluctuation of the suction pressure in a period from cranking of the engine till combustion start in a fully open state of a throttle valve of the engine is detected to detect an abnormality of the suction pressure sensor.

The document EP 0 894 963 discloses a further trouble diagnosis method of pressure sensors. In this method, sensor errors are derived on the basis of a comparison between the readings of a suction pressure sensor and an ambient pressure detecting sensor.

In general, the fuel injection amount at the cranking time is mainly determined in accordance with water temperature. The suction pressure drops with fuel injection. Therefore, when the suction pressure sensor is normal, the detected suction pressure should change. When the detected suction pressure makes only a slight change just after the start, the suction pressure is supposed to be erroneously detected because of a deviation of detection property of the suction pressure sensor, that is, occurrence of what is called out-of-range abnormality.

Then, in the conventional trouble diagnosis method, a difference between the suction pressure (maximum value) detected at an engine starting time and the suction pressure (minimum value) detected after an elapse of a predetermined time is obtained, and the suction pressure sensor is judged to be abnormal when the difference is not more than a predetermined value. The Japanese Unexamined Patent Publication No. Hei 6-93922 also discloses that the atmospheric pressure detected by the atmospheric pressure sensor in the engine starting time is substituted for the maximum value of the suction pressure sensor for the engine provided with the suction pressure sensor and the atmospheric pressure sensor.

However, in the conventional trouble diagnosis method, in order to diagnose a trouble in the suction pressure sensor, a waiting time is required until the suction pressure drops from the engine starting time. Therefore, the trouble of the suction pressure sensor cannot be detected before and just after the starting of the engine.

When the engine has a plurality of pressure sensors including the suction pressure sensor, in the conventional trouble diagnosis method, the abnormality of the suction pressure sensor can be detected, but it is difficult to detect the abnormality of the pressure sensor other than the suction pressure sensor.

Furthermore, when the atmospheric pressure detected at the engine starting time is substituted for the maximum value of the suction pressure sensor, and even when the suction pressure sensor is normal, the sensor sometimes detects erroneously the pressure to be abnormal. This is because the atmospheric pressure sensor detects the atmospheric pressure to be smaller than an actual atmospheric pressure because of a sensor malfunction, and the erroneously detected pressure is set as the maximum value of the suction pressure sensor. In this case, a difference between the erroneously set maximum value and an adequate minimum value of the suction pressure sensor is not more than the predetermined value, and the abnormality of the suction pressure sensor is erroneously detected.

Moreover, an object of the conventional method is a gasoline engine whose throttle valve is fully closed at the engine starting time. Generally in a diesel engine substantially including no throttle valve, when the engine starts, the suction pressure does not drop as in the gasoline engine. Therefore, when the conventional diagnosis method is applied to the diesel engine, and even when the suction pressure sensor is normal, the difference between the suction pressure detected at the engine starting time and the detected suction pressure after the elapse of the predetermined time is not more than the predetermined value, and the abnormality of the suction pressure sensor is erroneously detected.

An object of the present invention is to provide an abnormality detection apparatus for detecting an abnormality of a pressure sensor irrespective of an engine type with a high precision at an early stage.

To achieve the above object, the present invention provides an abnormality detection apparatus which detects abnormalities of a plurality of pressure sensors for detecting air pressures that are used as control parameters of an engine. The apparatus includes a comparator which compares detected pressures of two predetermined pressure sensors in the plurality of pressure sensors with each other to obtain a difference of the detected pressures of the two pressure sensors, before an output shaft of the engine starts to be rotated. A controller determines that a property of either one pressure sensor of the two pressure sensors has an out-of-range abnormality when the difference of the detected pressures is larger than a predetermined allowable value, wherein the controller prohibits the detected pressures of the two pressure sensors from being used as the control parameters of the engine, and sets a control parameter for use instead of the detected pressure of at least one of the pressure sensors in accordance with a running state of the engine when the out-of-range abnormality is detected.

A further perspective of the present invention is a method for detecting abnormalities of a plurality of pressure sensors for detecting a plurality of air pressures related to a running state of an engine. The method includes the steps of calculating a difference of the detected pressures of two predetermined pressure sensors in the plurality of pressure sensors, before an output shaft of the engine starts to be rotated, comparing the difference of the detected pressures with a predetermined allowable value, judging that either one of the two pressure sensors has an out-of-range abnormality when the difference of the detected pressures is larger than the allowable value, prohibiting the detected pressures of the two pressure sensors from being used as control parameters of the engine, and setting a control parameter for use instead of the detected pressure of at least one of the pressure sensors in accordance with the running state of the engine.

Other aspects and advantages of the present invention will become apparent from the following description, taken in conjunction with the accompanying drawings, illustrating by way of example the principles of the invention.

The features of the present invention are set forth with particularity in the appended claims. The invention, together with objects and advantages thereof, may best be understood by reference to the following description of the presently preferred embodiments together with the accompanying drawings in which:

Fig. 1 is a schematic view of an abnormality detection apparatus of a pressure sensor according to a first embodiment of the present invention;

Figs. 2 and 3 each are a flowchart of an abnormality detection routine executed by the abnormality detection apparatus of Fig. 1;

Fig. 4 is a graph showing a relation between an output voltage and a pressure of the pressure sensor;

Figs. 5 and 6 each are a flowchart of the abnormality detection routine executed by the abnormality detection apparatus according to a second embodiment of the present invention.

(First Embodiment)

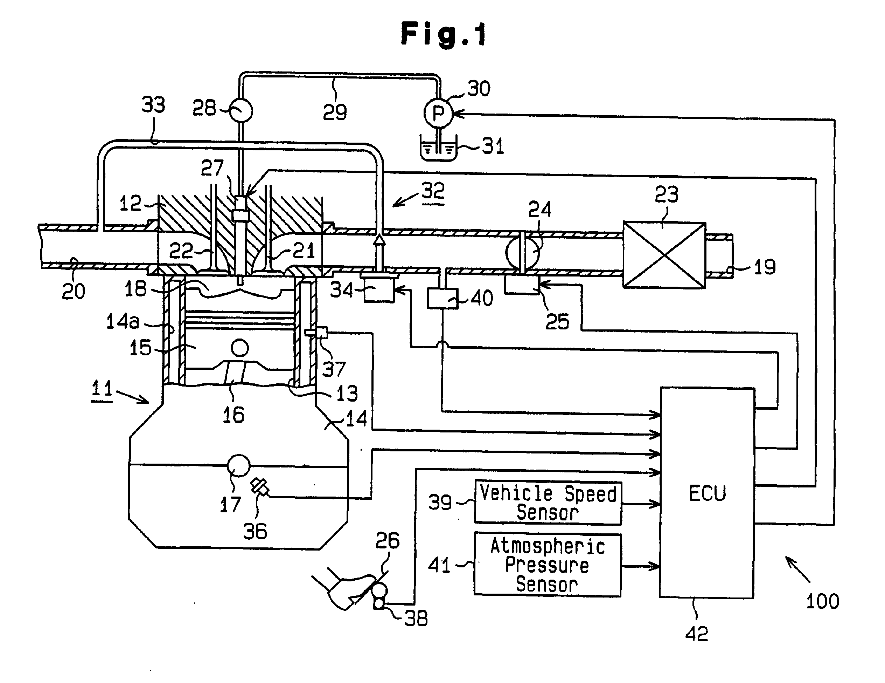

An abnormality detection apparatus 100 of a sensor according to a first embodiment of the present invention will be described hereinafter with reference to Figs. 1 to 4. The abnormality detection apparatus 100 detects an abnormality of a pressure sensor of a vehicular diesel engine 11.

Fig. 1 shows the diesel engine 11 mounted on a vehicle, and the abnormality detection apparatus 100 provided in the engine 11. The engine 11 has a cylinder head 12, and a cylinder block 14 having a plurality of cylinders 13. A piston 15 is contained in each cylinder 13 so that the piston 15 can reciprocate. Each piston 15 is connected to an output shaft, or a crank shaft 17, via a connecting rod 16. The reciprocation of the piston 15 is transformed to rotation of the crank shaft 17 by the connecting rod 16.

A combustion chamber 18 located in each cylinder 13 is connected to an intake passage 19 and an exhaust passage 20. A suction valve 21 and an exhaust valve 22 are provided for each cylinder 13 in the cylinder head 12. The suction valve 21 and the exhaust valve 22 reciprocate with the rotation of the crank shaft 17, so that the combustion chamber 18 is opened and closed.

An air cleaner 23 and a throttle valve 24 are provided in the intake passage 19. In a suction stroke, the piston 15 descends, while the exhaust valve 22 is closed and the suction valve 21 is opened. Thereby, the pressure of the combustion chamber 18 indicates a value (negative pressure) lower than a value of outside air, and air is taken into the combustion chamber 18 from the outside of the engine 11 through the intake passage 19.

The throttle valve 24 is supported to be rotatable in the intake passage 19, and driven by an actuator 25 such as a step motor connected to the throttle valve 24. An intake amount of air passed through the intake passage 19 changes in accordance with a throttle angle coefficient corresponding to a rotation angle of the throttle valve 24. The throttle angle coefficient indicates a minimum value, when the opening area of the intake passage 19 becomes a maximum. The coefficient indicates a maximum value, when the opening area of the intake passage 19 becomes a minimum.

A plurality of fuel injection valves 27 for injecting fuel to the plurality of combustion chambers 18 are attached to the cylinder head 12. Each fuel injection valve 27 includes a solenoid valve (not shown), and a fuel injection amount and timing to each combustion chamber 18 from the fuel injection valve 27 are controlled by the solenoid valve. The fuel injection valve 27 is connected to a common pressure storage piping, or a common rail 28. While the solenoid valve is open, the fuel in the common rail 28 is injected to the corresponding combustion chamber 18 from the fuel injection valve 27. A relatively high pressure corresponding to a fuel injection pressure is applied to the common rail 28 by a supply pump 30. More specifically, the supply pump 30 is connected to the common rail 28 via a supply piping 29. The supply pump 30 takes the fuel from a fuel tank 31, pressurizes the fuel by a plunger (not shown), which reciprocates in synchronization with the rotation of the engine 11, and supplies the fuel to the common rail 28.

The intake air introduced into the cylinder 13 through the intake passage 19 is compressed by the piston 15 and comes to have a high temperature and pressure. The fuel is injected from the fuel injection valve 27. The injected fuel is ignited by heat of the intake air and is combusted. A combustion gas generated at this time allows the piston 15 to reciprocate, the crank shaft 17 is rotated, and a drive force (power torque) of the engine 11 is obtained. The combustion gas is exhausted through the exhaust passage 20 as the exhaust valve 22 opens.

The engine 11 also includes an exhaust gas recirculation (hereinafter referred to as "EGR") apparatus 32 for recirculating a part of exhaust gas passed through the exhaust passage 20 back to the intake passage 19. The EGR apparatus 32 mixes the exhaust gas (EGR gas) with the intake air, and increases a proportion of the inactive gas in an air-fuel mixture. Thereby, a combustion maximum temperature of the air-fuel mixture drops, and generation of air pollutants such as nitrogen oxide (NOx) is reduced.

The EGR apparatus 32 includes an EGR passage 33 and an EGR valve 34. The EGR passage 33 connects the exhaust passage 20 to a return position defined in the intake passage 19, which is downstream from the throttle valve 24. The EGR valve 34 is located at the return position or in the EGR passage 33. The pressure (suction pressure) of the return position is lower than the atmospheric pressure when the engine 11 is running. Therefore, when the EGR valve 34 is opened, a part of the exhaust gas (EGR gas) is recirculated to the intake passage 19 from the exhaust passage 20 through the EGR passage 33.

A flow rate of the EGR gas in the EGR passage 33, or an EGR gas flow rate, changes in accordance with an opening angle (EGR angle coefficient) of the EGR valve 34. The EGR opening angle coefficient changes with a movement amount of a valve body of the EGR valve 34. In detail, the EGR angle coefficient becomes a minimum, when the EGR valve 34 is fully closed. The coefficient increases, as the valve is opened. The coefficient becomes a maximum, when the valve is fully opened.

Various sensors 36, 37, 38, 39, 40, 41 for detecting the running state of the engine 11 are provided in the vehicle. A crank position sensor 36 is located in the vicinity of the crank shaft 17 and generates a pulse signal, each time the crank shaft 17 rotates by a predetermined angle. The sensor supplies the pulse signal to an electronic control unit (ECU) 42. The ECU 42 functions as a controller. The ECU 42 detects a rotation number of the crank shaft 17 per unit time, or an engine rotation speed NE, from the pulse signal, and converts that into a detection signal. A coolant temperature sensor 37 attached to the cylinder block 14 detects the temperature of a cooling water passed through a water jacket 14a, or a coolant temperature, and supplies the detection signal to the ECU 42. An acceleration angle sensor 38 is located in the vicinity of an acceleration pedal 26 and detects an acceleration angle, or a depression amount of the acceleration pedal 26 by a driver, an acceleration angle, and supplies the detection signal to the ECU 42. A vehicle speed sensor 39 is located on an output shaft of a speed regulator (not shown) connected to the engine 11 and detects a running speed of the vehicle, and supplies the detection signal to the ECU 42.

A plurality of pressure sensors including a suction pressure sensor 40 and an atmospheric pressure sensor 41 detect the pressure of air related to the running state of the engine 11. The suction pressure sensor 40 is disposed in the downstream side of the throttle valve 24 in the intake passage 19, and detects a suction pressure (absolute pressure). The atmospheric pressure sensor 41 is located in a vehicle chamber, and detects the atmospheric pressure. The suction pressure sensor 40 and the atmospheric pressure sensor 41 generate voltage signals in accordance with the suction pressure and the atmospheric pressure, and supply the voltage signals to the ECU 42. The detected suction pressure and atmospheric pressure are used as some of control parameters of the engine 11 in a processing of the ECU 42.

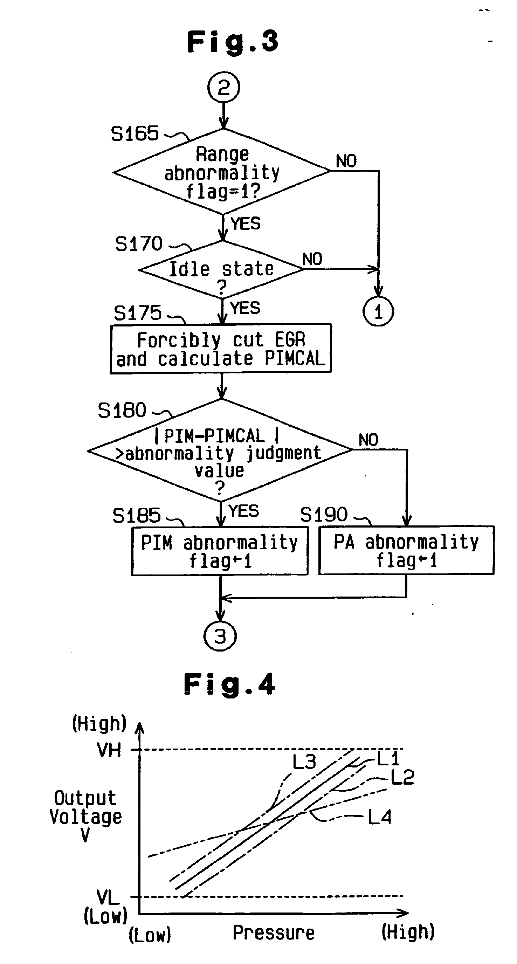

Fig. 4 shows detection characteristics of the suction pressure sensor 40 and the atmospheric pressure sensor 41. The abscissa indicates the pressure, and the ordinate indicates output voltages of the pressure sensors 40, 41. A line L1 shows the properties of the normal suction pressure sensor 40 and the atmospheric pressure sensor 41. The output voltages of the normal suction pressure sensor 40 and the atmospheric pressure sensor 41 increase substantially in proportion to a rise of the pressure. Lines L2, L3, L4 show the properties of the abnormal suction pressure sensor 40 and the atmospheric pressure sensor 41. For the lines L2, L3, an inclination is similar to that of the line L1, but the output voltage corresponding to a certain pressure that differs from that of the line L1. The line L4 has an inclination different from that of the line L1.

Examples of types of abnormalities of the sensors 40, 41 include an out-of-range abnormality, disconnection, and short-circuit. When the disconnection occurs, the output voltage of each sensor 40, 41 is lower than a lower limit value VL. When the short-circuit occurs, the output voltage of each sensor 40, 41 is higher than an upper limit value VH.

The ECU 42 for controlling the engine 11 is constituted mainly of a microcomputer. A central processing unit (CPU) performs calculation in accordance with control program, initial data, and control map stored in a read-only memory (ROM), and controls the engine 11 based on a calculation result. A random access memory (RAM) temporarily stores the calculation result.

The control of the engine 11 includes a fuel injection control, throttle control, EGR control, and abnormality detection control of the pressure sensor.

For example, in the fuel injection control, an amount and injection time of the fuel injected from the fuel injection valve 27 are determined. To determine the fuel injection amount, the ECU 42 refers, for example, to a predetermined control map, and calculates a basic fuel injection time, corresponding to the engine rotation speed NE and acceleration angle. The ECU 42 corrects the basic fuel injection time, and determines the final fuel injection time based on the coolant temperature and the atmospheric pressure.

In other words, to determine the fuel injection time, the ECU 42 refers, for example, to the predetermined control map, and calculates the basic fuel injection time corresponding to the engine rotation speed NE and the acceleration angle. The ECU 42 corrects the basic fuel injection time based on the coolant temperature, and determines the final fuel injection time. The ECU 42 starts turning on electricity to the fuel injection valve 27, when the crank position sensor 36 outputs the signal at a fuel injection start time. The ECU 42 turns off the electricity to the fuel injection valve 27, when the fuel injection time elapses from this start time.

The throttle control includes, for example, a step of calculating the degree of opening of the target throttle angle coefficient corresponding to the engine rotation speed NE and the fuel injection amount. The ECU 42 drives the actuator 25 in accordance with the target throttle angle coefficient so that an actual throttle angle agrees with a target throttle angle.

The EGR control includes, for example, a step of judging whether or not an execution condition of the EGR control is established based on the engine rotation speed NE, coolant temperature, and acceleration angle. As examples of the EGR execution condition, the coolant temperature is not less than a reference value, the engine 11 is continuously run for a predetermined time or more from the starting time, and a change amount of the acceleration angle has a positive value. When the EGR execution condition is not established, the ECU 42 holds the EGR valve 34 in the fully closed state. On the other hand, when the EGR execution condition is established, the ECU 42 refers to the predetermined control map, calculates a target angle coefficient of the EGR valve 34 corresponding to the engine rotation speed NE and the fuel injection amount, and drives the EGR valve 34 based on the target angle coefficient.

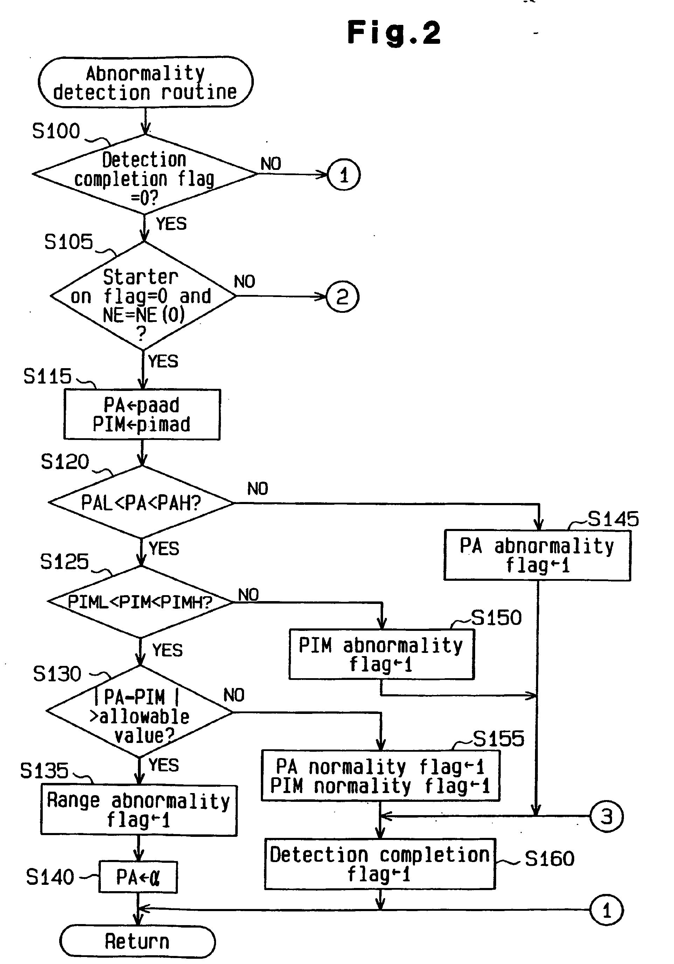

The abnormality detection control of the pressure sensor will be described hereinafter. The ECU 42 executes an abnormality detection routine shown in Figs. 2 and 3 and detects the abnormality of the suction pressure sensor 40 and the atmospheric pressure sensor 41. The abnormality detection routine is repeatedly executed each predetermined time. In the abnormality detection routine, a detection completion flag, starter-on flag, range abnormality flag, atmospheric pressure (PA) normality flag, PA abnormality flag, suction pressure (PIM) normality flag, and PIM abnormality flag are used. In an initialization routine executed in response to an operation of an ignition key into an on position, these flags are set to zero.

First, it is determined in steps S100, S105 whether the engine 11 is not cranked yet. More specifically, the ECU 42 determines in the step S100 whether or not the detection completion flag is zero. When an answer to the step S100 is NO, the abnormality detection routine ends. On the other hand, when the answer to the step S100 is YES, the ECU 42 determines in the step S105 whether or not the following two conditions are both satisfied. Two conditions are: (i) the starter-on flag is zero; and (ii) the engine rotation speed NE is the same as the engine rotation speed NE (0) before the cranking. The starter-on flag is set to zero when a starter for starting the engine 11 is off and is stopped. The flag is set to 1 when the starter is on and is driven. The engine rotation speed NE (0) before the cranking is, for example, 0 rpm.

When the answer to the step S105 is NO, the engine 11 is started. In this case, the processing shifts to step S165. Additionally, the engine 11 is started when the engine 11 is completely combusted and the starter is turned off. In other words, a period in which the engine 11 is completely combusted but the starter is driven is a period before the engine 11 is started.

On the other hand, the answer to the step S105 is YES, the engine is not cranked yet, and the processing shifts to step S115. In the step S115, the ECU 42 performs A/D conversion of the detection signal of the atmospheric pressure sensor 41, and the A/D converted value paad is set as a detected atmospheric pressure PA. Instead, when the atmospheric pressure in this control period is PA(i), and the atmospheric pressure in the previous control period is represented by PA(i-1), the detected atmospheric pressure PA calculated by the following equation 1 may be used.

$$PA(i) = a*PA(i-1)+b*paad \ldots (1)$$

In the equation 1, coefficients a, b each are a constant which satisfies conditions of a+b = 1, and a > b.

Moreover, in the step S115, the ECU 42 performs A/D conversion of the detection signal of the suction pressure sensor 40, and sets the A/D converted value pimad as a detected suction pressure PIM. Instead, when the suction pressure in this control period is PIM(i), and the suction pressure in the previous control period is represented by PIM(i-1), the detected suction pressure PIM calculated by the following equation 2 may be used.

$$PIM(i) = c*PIM(i-1)+d*pimad \ldots (2)$$

In the equation 2, coefficients c, d each are a constant which satisfies conditions of c+d = 1, and c > d.

It is determined in step S120 whether the detected atmospheric pressure PA set in the step S115 is in a predetermined range defined by a lower limit value PAL and an upper limit value PAH. The lower limit value PAL corresponds to the lower limit value VL of Fig. 4, and the upper limit value PAH corresponds to the upper limit value VH of Fig. 4. Here, the atmospheric pressure having the lower limit value PAL and the upper limit value PAH cannot be obtained, as long as the atmospheric pressure sensor 41 is normal. In other words, when the detected atmospheric pressure PA is smaller than the lower limit value PAL, or when the detected atmospheric pressure PA is larger than the upper limit value PAH, the atmospheric pressure sensor 41 is abnormal. In detail, when the detected atmospheric pressure PA is not more than the lower limit value PAL, the atmospheric pressure sensor 41 is highly possibly disconnected. When the pressure is not less than the upper limit value PAH, a possibility of a short-circuit is high.

Therefore, with NO in the step S120, the ECU 42 determines that the atmospheric pressure sensor 41 is abnormal, and changes the PA abnormality flag indicating that the atmospheric pressure sensor 41 is abnormal to 1 from zero in step S145. Thereafter, in step S160, the ECU 42 changes the detection completion flag to 1 from zero, and ends the abnormality detection routine.

With YES in the step S120, the ECU 42 determines in step S125 whether the detected suction pressure PIM is in a predetermined range defined by a lower limit value PIML and an upper limit value PIMH. The lower limit value PIML corresponds to the lower limit value VL of Fig. 4, and the upper limit value PIMH corresponds to the upper limit value VH of Fig. 4. Here, the atmospheric pressures having the lower limit value PIML and the upper limit value PIMH cannot be obtained, as long as the suction pressure sensor 40 is normal. In other words, when the detected suction pressure PIM is smaller than the lower limit value PIML, or when the detected suction pressure PIM is larger than the upper limit value PIMH, the suction pressure sensor 40 is abnormal. More specifically, when the detected suction pressure PIM is not more than the lower limit value PIML, the suction pressure sensor 40 is highly possibly disconnected. When the pressure is not less than the upper limit value PIMH, the possibility of a short-circuit is high.

Therefore, with NO in the step S125, the ECU 42 determines that the suction pressure sensor 40 is abnormal, and changes the PIM abnormality flag indicating that the suction pressure sensor 40 is abnormal to 1 from zero in step S150. In the step S160, the ECU 42 changes the detection completion flag to 1 from zero, and ends the abnormality detection routine.

With YES in the step S125, the ECU 42 determines in step S130 whether either one of the suction pressure sensor 40 or the atmospheric pressure sensor 41 has the out-of-range abnormality. When there is no out-of-range abnormality, the suction pressure sensor 40 and the atmospheric pressure sensor 41 are determined to be normal, because it has already been determined that neither the disconnection nor the short-circuit occurs.

Since the engine 11 stops before the cranking of the engine 11, the pressure (suction pressure) of the intake passage 19 is substantially equal to the atmospheric pressure. Therefore, when the atmospheric pressure sensor 41 and the suction pressure sensor 40 are both normal, the detected atmospheric pressure PA and detected suction pressure PIM should substantially indicate the atmospheric pressure, and a difference between the detected atmospheric pressure PA and the detected suction pressure PIM is zero or relatively small. If either one of the atmospheric pressure sensor 41 and the suction pressure sensor 40 has the out-of-range abnormality, the difference between the detected atmospheric pressure PA and the detected suction pressure PIM is relatively large. Moreover, in step S130, a comparator (not shown) of the ECU 42 compares the detected atmospheric pressure PA with the detected suction pressure PIM. The ECU 42 determines whether the absolute value (|PA-PIM|) of the difference between the detected atmospheric pressure PA and the detected suction pressure PIM is larger than a predetermined dissociation allowable value. The dissociation allowable value is a reference value for judging whether either one of the atmospheric pressure sensor 41 and the suction pressure sensor 40 has the out-of-range abnormality, and is, for example, 5kPa.

With YES in the step S130, there is a high possibility that either the atmospheric pressure sensor 41 or the suction pressure sensor 40 has the out-of-range abnormality, and therefore the ECU 42 changes the range abnormality flag to 1 from zero in step S135. When the range abnormality flag is 1, the detection signals of the suction pressure sensor 40 and the atmospheric pressure sensor 41 are prohibited from being used as the control parameters of the engine control such as the fuel injection amount control.

In step S140, the ECU 42 sets a predetermined value $\alpha$ as the detected atmospheric pressure PA, and ends the abnormality detection routine. The predetermined value $\alpha$ is determined in accordance with the running state of the engine 11, and is, for example, 100kPa. The detected atmospheric pressure PA set in the step S140 is used, for example, to correct the injection amount during the fuel injection amount control of the engine 11.

On the other hand, with NO in the step S130, the ECU 42 determines that the sensors 40 and 41 are both normal. In step S155, the ECU 42 changes the PA normality flag indicating that the atmospheric pressure sensor 41 is normal to 1 from zero, and changes the PIM normality flag indicating that the suction pressure sensor 40 is normal to 1 from zero. In the step S160, the ECU 42 changes the detection completion flag to 1 from zero, and ends the abnormality detection routine.

Additionally, with NO in the step S105, that is, when the engine 11 is started, the ECU 42 specifies the pressure sensor having the out-of-range abnormality in steps S165 to S190 of Fig. 3. It is determined in the step S165 whether the range abnormality flag is 1. It is determined in step S170 whether the running state of the engine 11 is an idle state. For example, when the vehicle speed detected by the vehicle speed sensor 39 is 0 km/h, the detected acceleration angle is 0%, and the engine rotation speed NE is an idle rotation speed, the running state of the engine 11 is the idle state.

With NO in either one of the steps S165 and S170, the abnormality detection routine ends. On the other hand, with YES in both the steps S165 and S170, that is, when either of the pressure sensors has the out-of-range abnormality, and the running state of the engine 11 is stable in the idle state, the ECU 42 closes the EGR valve 34 and forcibly cuts the EGR in step S175.

In the step S175, the ECU 42 uses the engine rotation speed NE and the throttle angle as the parameters to calculate an estimated suction pressure PIMCAL. The throttle angle is obtained based on the engine rotation speed NE and the injection amount. Among various parameters related to the running state of the engine 11, the engine rotation speed NE and the throttle angle are parameters whose influences exerted onto the suction pressure are relatively large.

The estimated suction pressure PIMCAL is obtained, for example, by referring to the predetermined control map stored in the ROM. The control map is determined based on a measured value obtained by a bench test. In the bench test, the EGR execution condition is not established, and the EGR is not carried out. Under these circumstances, a combination of two parameters is variously changed, and the suction pressure is measured for each combination.

With the constant throttle angle, the estimated suction pressure PIMCAL of the control map becomes high as the engine rotation speed NE becomes lower, and decreases with an increase of the engine rotation speed NE. This is because, in the suction stroke of the engine 11, the pressures in the cylinder 13 and the intake passage 19 become lower than the pressure of the outside air with the descending of the piston 15. However, the number of suctions per unit time increases with the increase of the engine rotation speed NE.

Moreover, with the constant engine rotation speed NE, the estimated suction pressure PIMCAL of the control map is minimized when the throttle angle coefficient is a maximum, that is, when the throttle valve 24 is fully closed. The pressure is maximized when the throttle angle coefficient is a minimum, that is, when the throttle valve 24 is fully opened. This is because, with a decrease of the throttle angle coefficient (opening of the throttle valve 24), outside air easily flows into the intake passage 19.

In the step S175, the ECU 42 reads the estimated suction pressure PIMCAL corresponding to the throttle angle and the engine rotation speed NE from the control map. The detected suction pressure PIM of the suction pressure sensor 40 is not used in calculating the estimated suction pressure PIMCAL. Therefore, even when the detected suction pressure PIM has an abnormal value, the estimated suction pressure PIMCAL is not influenced, and has a substantially true suction pressure.

Subsequently in step S180, the ECU 42 determines whether the difference (absolute value) between the estimated suction pressure PIMCAL and the detected suction pressure PIM is larger than a predetermined abnormality judgment value. Here, when the suction pressure sensor 40 has the out-of-range abnormality, the difference between the detected suction pressure PIM and the estimated suction pressure PIMCAL must be relatively large. Therefore, with YES in the step S180, the ECU 42 changes the PIM abnormality flag to 1 from zero in step S185. In this manner, the pressure sensor having the out-of-range abnormality is determined to be the suction pressure sensor 40, and the normal pressure sensor is determined to be the atmospheric pressure sensor 41.

Moreover, when the suction pressure sensor 40 is normal, the detected suction pressure PIM must be substantially equal to the estimated suction pressure PIMCAL. Therefore, with NO in the step S180, the ECU 42 changes the PA abnormality flag to 1 from zero in step S190. In this manner, the normal pressure sensor is determined to be the suction pressure sensor 40, and the pressure sensor having the out-of-range abnormality is determined to be the atmospheric pressure sensor 41.

After the step S185 or S190, the processing advances to the step S160, and the abnormality detection routine ends.

According to the first embodiment described above in detail, the following effects are obtained.

(1) The detected suction pressure PIM is compared with the detected atmospheric pressure PA before the cranking of the engine 11 (step S130), and it is determined that either one of the sensors 40 and 41 has the out-of-range abnormality when the difference between the detected suction pressure PIM and the detected atmospheric pressure PA is larger than the predetermined dissociation allowable value (step S135).

Therefore, as long as both the suction pressure sensor 40 and the atmospheric pressure sensor 41 do not have the out-of-range abnormality, before starting the engine 11 (just after the on operation of the ignition switch), that is, at an earlier stage than that of the prior art, it is detected that either one of the atmospheric pressure sensor 41 and the suction pressure sensor 40 is normal and the other one has the out-of-range abnormality, or that the suction pressure sensor 40 and the atmospheric pressure sensor 41 are normal.

Moreover, since presence or absence of the out-of-range abnormality is detected before the cranking, the out-of-range abnormality is detected regardless of the suction pressure after starting the engine 11. Therefore, the out-of-range abnormality is detected even in a gasoline engine whose suction pressure drops after the starting, or even in a diesel engine whose suction pressure is not so much lowered after the starting.

(2) After the on operation of the ignition switch, the abnormality detection routine is only once executed, and the presence or absence of the out-of-range abnormality is detected, so that a time required for detecting the abnormality is shortened.

(3) In the first embodiment, the detected atmospheric pressure PA is not used instead of the maximum value of the detected suction pressure PIM, and the presence or absence of the out-of-range abnormality is detected based on the difference between the detected atmospheric pressure PA and the detected suction pressure PIM. Therefore, if the atmospheric pressure sensor 41 has a trouble, and the detected atmospheric pressure PA is smaller than the actual atmospheric pressure, the trouble of the atmospheric pressure sensor 41 possibly has no adverse influence on the detection of the out-of-range abnormality. When the suction pressure sensor 40 is normal, the difference between the detected atmospheric pressure PA and the detected suction pressure PIM is relatively large, and the out-of-range abnormality is detected with a high precision.

(4) In the first embodiment, the closing of the intake passage 19 and fluctuation of the suction pressure by the closing of the throttle valve 24 are not set as prerequisites for detecting the out-of-range abnormality. Therefore, when the suction pressure sensor 40 is normal, and even when the difference between the detected suction pressure PIM of the engine starting time and the detected suction pressure PIM after the elapse of the predetermined time is not more than the predetermined value, the out-of-range abnormality is not erroneously detected as in the prior art, and detection precision is therefore enhanced.

(5) The disconnection and short-circuit of the atmospheric pressure sensor 41 can be detected in the step S120. Similarly in the step S125, the disconnection and short-circuit of the suction pressure sensor 40 can be detected.

(6) When the out-of-range abnormality is detected, the range abnormality flag is changed to 1, and the actually measured values of the suction pressure sensor 40 and atmospheric pressure sensor 41 are prohibited from being used as the control parameters of the engine 11 (step S135). The predetermined value $\alpha$ corresponding to the running state of the engine 11 is set as the control parameter instead of the atmospheric pressure detected by the atmospheric pressure sensor 41 (step S140). This avoids a disadvantage that the detected pressure having a high possibility of abnormality is used to control the engine 11. In addition, the predetermined value $\alpha$ corresponding to the running state of the engine 11 is set as the control parameter. Therefore, even when the atmospheric pressure sensor 41 has the out-of-range abnormality, the engine 11 is continuously controlled without any problem.

(7) When the out-of-range abnormality is detected, and after the engine 11 is started, the suction pressure is estimated based on the running state (step S175). The pressure sensor having the out-of-range abnormality is specified based on the difference (absolute value) between the estimated suction pressure PIMCAL and the actually measured suction pressure PIM (steps S180, S185, S190). Therefore, in addition to the detection of the out-of-range abnormality, the pressure sensor having the out-of-range abnormality, and the normal pressure sensor are specified.

(8) The estimated suction pressure PIMCAL is calculated based on the throttle angle and the engine rotation speed NE. The throttle angle and the engine rotation speed NE are parameters which relatively largely influence the suction pressure. Therefore, the suction pressure is estimated in consideration of a correlation between the throttle angle and the suction pressure, and a correlation between the engine rotation speed NE and the suction pressure.

(9) The actual suction pressure is lowest when the EGR valve 34 is fully closed, increases when the degree of opening of the EGR valve 34 increases, and becomes highest when the EGR valve 34 is fully opened. The degree of opening of the EGR valve 34 influences the suction pressure in this manner, but the EGR valve 34 is closed during calculation of the estimated suction pressure PIMCAL (step S175). Since the influence of the EGR valve 34 onto the suction pressure is eliminated, the estimated suction pressure PIMCAL is appropriately calculated. Particularly in the diesel engine 11, the EGR valve 34 is opened and the EGR gas is recirculated to the intake passage 19 during idling. However, even in this case, the influence by the EGR is eliminated.

(10) The estimated suction pressure PIMCAL is calculated at the idling time when the engine rotation speed NE and the throttle angle are stable (steps S170, S175). Therefore, the estimated suction pressure PIMCAL is calculated with a high precision.

(11) Only when the out-of-range abnormality of the suction pressure sensor 40 or the atmospheric pressure sensor 41 is detected, the EGR valve 34 is forcibly closed and the EGR is cut (steps S165, S175). Therefore, a frequency of forced driving of the EGR valve 34 is reduced. As a result, erroneous detection in which the normal sensor is determined to be abnormal is inhibited, and the detection precision is enhanced.

(Second Embodiment)

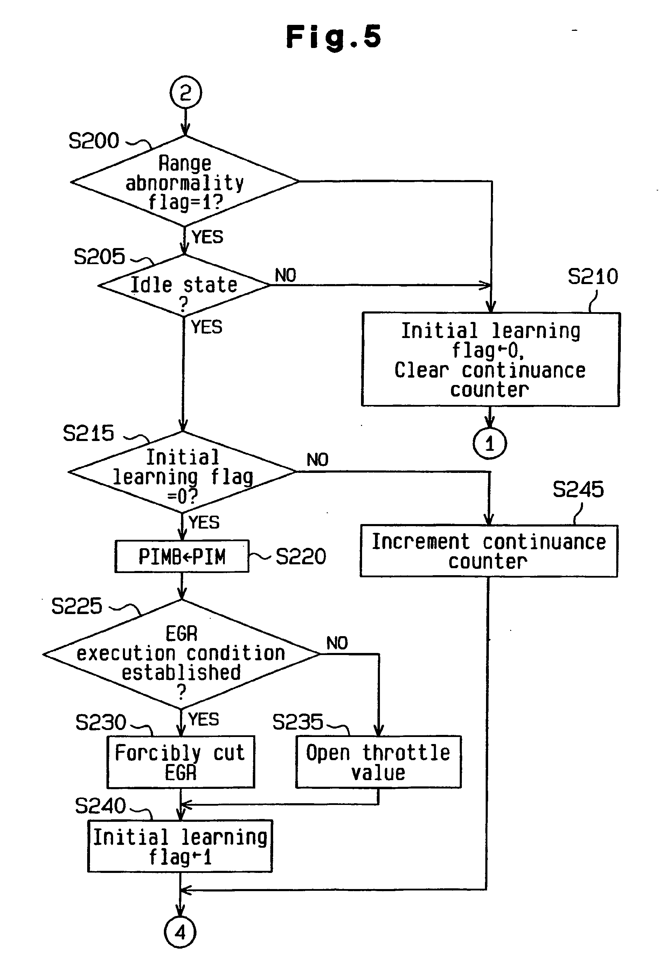

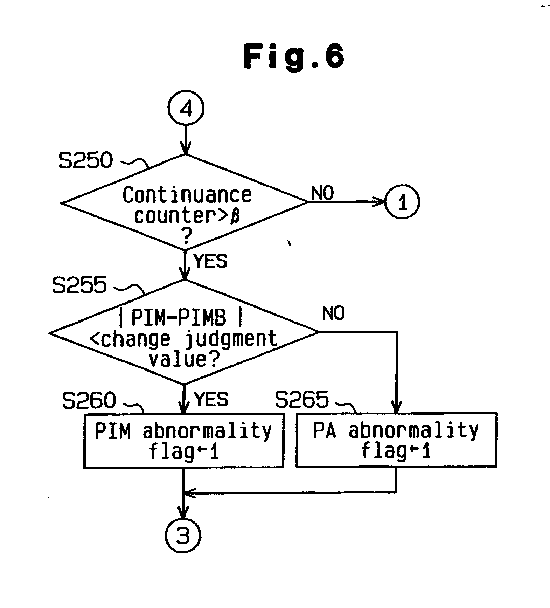

A second embodiment of the present invention, and how it differs from the first embodiment, will next be described. In the second embodiment, steps S200 to S265 of Figs. 5 and 6 are executed instead of the steps S165 to S190 of the first embodiment (Fig. 3).

A continuance counter and initial learning flag are used in the second embodiment. The continuance counter measures a continuance time while judgment conditions of steps S200, S205 are both satisfied. The continuance counter is cleared in an initialization routine, and the initial learning flag is set to zero in the initialization routine.

With NO in the step S105 of Fig. 2, the ECU 42 determines in the step 200 whether the range abnormality flag is 1. With YES in the step S200, the ECU 42 determines in the step S205 whether the running state of the engine 11 is the idle state. The steps S200, S205 correspond to the steps S165, S170 of Fig. 3. With NO in at least one of the steps S200, S205, the ECU 42 sets the initial learning flag to zero in the step S210, clears the continuance counter, and ends the abnormality detection routine.

With YES both in the steps S200, S205, the ECU 42 determines in step S215 whether the initial learning flag is zero. With YES in the step S215, in step S220 the ECU 42 stores the detected suction pressure PIM as a suction pressure PIMB before forcibly driving the EGR valve 34 in the RAM.

The ECU 42 determines in step S225 whether the EGR execution condition is established. When the EGR execution condition is satisfied, in step S230 the ECU 42 forcibly closes the EGR valve 34 and cuts the EGR. That is, originally, when the EGR execution condition is satisfied, the EGR valve 34 is opened. However, the ECU 42 forcibly closes the EGR valve 34. Since the EGR is cut, the suction pressure must change (drop).

With NO in the step S225, in step S235 the ECU 42 forcibly opens the closed throttle valve 24. Since the EGR valve 34 is closed, the suction pressure must change (rise) by the forced driving of the throttle valve 24.

When the EGR valve 34 is forcibly closed in the step S230 in this manner, and when the throttle valve 24 is forcibly opened in the step S235, the suction pressure changes before and after the forced driving of the respective valves 24, 34.

Next in step S240, the ECU 42 changes the initial learning flag to 1 from zero. Thereby, in the subsequent control period, as long as the judgment conditions of the steps S200, S205 are both satisfied, the answer to judgment of the step S215 is NO, steps S220 to S240 are skipped, and the continuance counter is incremented in step S245. Therefore, when first the judgment conditions of the steps S200, S205 are both satisfied, the suction pressure PIMB before the forced driving is stored (steps S215, S220), but in the subsequent control period the suction pressure PIMB before the forced driving is held.

After the processing of the step S240 or S245, the ECU 42 determines in step S250 of Fig. 6 whether the value of the continuance counter is larger than a predetermined value $\beta$. The predetermined value $\beta$ is a value corresponding to a time required until the suction pressure changes to some degree in response to the forced driving of the EGR valve 34 or the throttle valve 24, and corresponds, for example, to 1 second. With NO in the step S250, it is too early to check the change of the suction pressure, and therefore the abnormality detection routine is ended.

Conversely, with YES in the step S250, a sufficient time for checking the change of the suction pressure after the forced driving of the valve 24 or 34 elapses. In this case, in step S255, the ECU 42 checks the suction pressure, that is, the difference (absolute value) between the detected suction pressure PIM after the forced driving and the detected suction pressure PIMB before the forced driving, and determines whether the difference is smaller than a predetermined change judgment value (e.g., 5kPa).

If the suction pressure sensor 40 is normal, the detected suction pressures PIMB, PIM largely differ before and after the driving of the valve 24 or 34. Therefore, with NO in the step S255, the ECU 42 changes the PA abnormality flag to 1 from zero in step S265. Thereby, it is specified that the suction pressure sensor 40 is normal and the atmospheric pressure sensor 41 has the out-of-range abnormality.

On the other hand, when the suction pressure sensor 40 has the out-of-range abnormality, the detected suction pressures PIMB, PIM hardly change before and after the driving of the valve 24 or 34. Therefore, with YES in the step S255, the ECU 42 changes the PIM abnormality flag to 1 from zero in the step S260. Thereby, it is determined that the suction pressure sensor 40 has the out-of-range abnormality, and the atmospheric pressure sensor 41 is normal.

After the processing of the step S260 or S265, the ECU 42 changes the detection completion flag to 1 from zero in the step S160, and ends the abnormality detection routine.

According to the second embodiment, in addition to the effects (1) to (6) in the first embodiment, the following effects are obtained.

(12) When the out-of-range abnormality is detected, after starting the engine 11, the EGR valve 34 or the throttle valve 24 is forcibly driven, and the suction pressure is intentionally changed (steps S230, S235). The pressure sensor having the out-of-range abnormality is specified based on the change amounts of the detected suction pressures PIMB, PIM of the suction pressure sensor 40 before and after the driving of the valve 24 or 34 (steps S255, S260, S265). Therefore, the pressure sensor having the out-of-range abnormality, and the normal pressure sensor can be specified.

(13) In case of the detection of the out-of-range abnormality, when the engine 11 is in the idle state, and the EGR execution condition is satisfied, the EGR valve 34 is closed (steps S205, S225, S230). Moreover, when the engine 11 is in the idle state, and the EGR execution condition is not satisfied, the throttle valve 24 is opened (steps S205, S225, S235). The valve 24 or 34 to be driven is selected in this manner depending upon whether the EGR execution condition is satisfied. In other words, the valve 24 or 34 which easily changes the suction pressure after valve opening is selected. Therefore, the pressure sensor having the out-of-range abnormality is securely specified.

(14) The continuance counter measures a time for which the range abnormality flag is 1 and the engine 11 is in the idle state. When the value of the continuance counter is larger than the predetermined value $\beta$, the pressure sensor having the out-of-range abnormality is specified (steps S200, S205, S245, S250). Therefore, when the change of the suction pressure after the forced driving of the EGR valve 34 or the throttle valve 24 is insufficient, the pressure sensor is not specified. In other words, after the sufficient time for checking the change of the suction pressure after the forced driving elapses, the pressure sensor is specified. Therefore, the precision is high.

It should be noted that the respective embodiments may be modified as follows.
The abnormality detection processes of the first and second embodiments may be combined. Specifically, in the step S240 of Fig. 5, or before or after the step, the estimated suction pressure PIMCAL is calculated. The calculation is performed similarly as in the step S175 of Fig. 3. Moreover, in the step S255 of Fig. 6, or before or after the step, it is determined whether the difference (absolute value) between the detected suction pressure PIM and the estimated suction pressure PIMCAL is larger than the abnormality judgment value. This judgment is performed similarly as in the step S180 of Fig. 3.
Only when the judgment condition in the additional processing is satisfied, and the judgment condition of the step S255 is satisfied, the PIM abnormality flag is set to 1. In other cases, the PA abnormality flag is set to 1. The precision for specifying the abnormal pressure sensor is further enhanced by the combination.
In the first and second embodiments, when the out-of-range abnormality occurs in either one pressure sensor, the predetermined value $\alpha$ corresponding to the running state of the engine 11 is set as the detected atmospheric pressure PA (step S140). When the judgment condition of the step S180 or S255 is not satisfied, the predetermined value $\alpha$ may be set as the detected atmospheric pressure PA. In this case, the predetermined value $\alpha$ corresponding to the running state of the engine 11 is set as the control parameter of the engine 11, after the engine is started. Therefore, the engine 11 is continuously controlled without any problem.
When the judgment condition of the step S180 or S255 is satisfied, a predetermined value $\gamma$ corresponding to the running state of the engine 1 may be set as the detected suction pressure PIM. In this case, the predetermined value $\gamma$ corresponding to the running state of the engine 11 is set as the control parameter of the engine 11, after the engine 11 is started. Therefore, the engine 11 is continuously controlled without any problem.
After the steps S185, S190 of Fig. 3, or the steps S260, S265 of Fig. 6, only the detected pressure of the specified abnormal pressure sensor may be prohibited from being used as the control parameter of the engine 11. In this case, the detected pressure of the normal pressure sensor is used as the control parameter of the engine 11.
The condition of the step S170 may be changed to "whether the running state of the engine 11 is stable". In this case, the step S175 is executed, not only while the engine 11 is in the idle state, but also while the engine 11 is steadily run.
In the step S140 of Fig. 2, the predetermined value $\alpha$ is set as the detected atmospheric pressure PA. In addition, the predetermined value $\gamma$ corresponding to the running state of the engine 11 may be set as the detected suction pressure PIM. In the step S135, the out-of-range abnormality is determined, but the pressure sensor having the out-of-range abnormality is not specified yet. However, the predetermined values $\alpha$, $\gamma$ corresponding to the running state of the engine 11 are used as the control parameter of the engine 11. Therefore, the engine 11 is continuously controlled without any problem.
The present invention can also be applied to a system in which three or more pressure sensors are provided. In this case, two predetermined pressure sensors are used as the objects of the abnormality detection, the difference between the detected values is obtained, and the presence or absence of the out-of-range abnormality is determined based on the difference.
A plurality of pressure sensors as the objects of the abnormality detection may be pressure sensors different from one another in type, or the same type of pressure sensors.

An abnormality detection apparatus for detecting an abnormality of a pressure sensor for a gasoline engine and a diesel engine at an early stage. An ECU 42 checks a difference between a detected suction pressure of a suction pressure sensor 40 and a detected suction pressure of an atmospheric pressure sensor 41, before cranking of an engine 11. When the difference is larger than a dissociation allowable value, the ECU 42 determines that a property of the sensor 40 or 41 deviates from normal operation, prohibits both the detected suction pressures from being used as control parameters of the engine, and sets a value determined in accordance with a running state of the engine 11 instead of the pressures.

**Claims**

1. An abnormality detection apparatus (100) which detects abnormalities of a plurality of pressure sensors (40, 41) for detecting air pressures that are used as control parameters of an engine (11), the apparatus being **characterized by**:

   a comparator which compares detected pressures of two predetermined pressure sensors in the plurality of pressure sensors (40, 41) with each other to obtain a difference of the detected pressures of the two pressure sensors, before an output shaft (17) of the engine starts to be rotated; and
   a controller (42) which determines that a property of either one pressure sensor of the two pressure sensors has an out-of-range abnormality when the difference of the detected pressures is larger than a predetermined allowable value, wherein the controller prohibits the detected pressures of the two pressure sensors from being used as the control parameters of the engine, and sets a control parameter ($\alpha$, $\gamma$) for use instead of the detected pressure of at least one of the pressure sensors in accordance with a running state of the engine when the out-of-range abnormality is detected.

2. The abnormality detection apparatus of the pressure sensor according to claim 1, wherein the plurality of pressure sensors include a suction pressure sensor (40) for detecting a suction pressure in an intake passage (19) downstream from a throttle valve (24) and an atmospheric pressure sensor (41) for detecting atmospheric pressure.

3. The abnormality detection apparatus according to claim 2, wherein the engine has an exhaust gas recirculation passage (33) which connects an exhaust passage (20) and the intake passage (19) downstream from a throttle valve (24), and an exhaust gas recirculation valve (34) which changes a recirculation amount of an exhaust gas flowing through the exhaust gas recirculation passage, and the controller forces the exhaust gas recirculation valve to close after starting the engine, obtains an estimated suction pressure (PIMCAL) based on the running state of the engine, and specifies an abnormal pressure sensor based on the difference between the estimated suction pressure and the detected suction pressure, when the out-of-range abnormality is detected.

4. The abnormality detection apparatus according to claim 3, wherein the controller determines that the suction pressure sensor is abnormal when the difference between the estimated suction pressure (PINCAL) and the detected suction pressure (PIM) is larger than a predetermined abnormality judgment value, and determines that the atmospheric pressure sensor is abnormal when the difference is not more than the abnormality judgment value.

5. The abnormality detection apparatus according to claim 3 or 4, wherein the controller determines the running state of the engine based on a degree of opening of the throttle valve and an engine rotation speed (NE), and the controller estimates the suction pressure.

6. The abnormality detection apparatus according to any one of claims 3 to 5, wherein the controller estimates the suction pressure when the throttle valve closes the intake passage and the engine is in an idle state.

7. An abnormality detection apparatus which detects abnormalities of a suction pressure sensor and an atmospheric pressure sensor of an engine (11), wherein the engine includes: an exhaust gas recirculation passage (33) connecting an exhaust passage (20) and an intake passage (19) downstream from a throttle valve (24) for recirculating an exhaust gas of the engine (11) to the intake passage; an exhaust gas recirculation valve (34) to change a recirculation amount of the exhaust gas flowing through the exhaust gas recirculation passage; the suction pressure sensor for detecting a suction pressure at downstream from the throttle valve in the intake passage; and the atmospheric pressure sensor for detecting an atmospheric pressure, the apparatus being **characterized by**:

a comparator which compares detected pressures of the suction pressure sensor and the atmospheric pressure sensor with each other to obtain a difference of the detected pressures, before an output shaft (17) of the engine starts to be rotated; and

a controller (42) which determines that a property of either one of the suction pressure sensor and the atmospheric pressure sensor has an out-of-range abnormality, when the difference of the detected pressures is larger than a predetermined allowable value, wherein the controller drives at least one of the exhaust gas recirculation valve and the throttle valve after starting the engine, and specifies an abnormal pressure sensor based on a change amount of the detected suction pressure of the suction pressure sensor before and after the driving, when the out-of-range abnormality is detected.

8. The abnormality detection apparatus according to claim 7, wherein the controller opens the exhaust gas recirculation valve, only when the running state of the engine satisfies a predetermined exhaust gas recirculating execution condition, the controller forces the exhaust gas recirculation valve to close and stops the recirculation of the exhaust gas, when the throttle valve closes the intake passage, the engine is in an idle state, and the exhaust gas recirculating execution condition is satisfied, and the controller forces the throttle valve to open, when the engine is in the idle state and the exhaust gas recirculating execution condition is not satisfied.

9. The abnormality detection apparatus according to claim 7 or 8, wherein the controller calculates the difference of the suction pressures detected before and after the driving of at least one of the exhaust gas recirculation valve and the throttle valve, determines that the suction pressure sensor is abnormal, when the difference is not more than a predetermined judgment value, and determines that the atmospheric pressure sensor is abnormal, when the difference is larger than the judgment value.

10. A method for detecting abnormalities of a plurality of pressure sensors (40, 41) for detecting a plurality of air pressures related to a running state of an engine (11), the method being **characterized by** the steps of:

calculating (S130) a difference of the detected pressures of two predetermined pressure sensors in the plurality of pressure sensors (40, 41), before an output shaft (17) of the engine starts to be rotated;

comparing (S130) the difference of the detected pressures with a predetermined allowable value;

judging (S135) that either one of the two pressure sensors has an out-of-range abnormality, when the difference of the detected pressures is larger than the allowable value;

prohibiting (S135) the detected pressures of the two pressure sensors from being used as control parameters of the engine; and

setting (S140) a control parameter ($\alpha$, $\gamma$) for use instead of the detected pressure of at least one of the pressure sensors in accordance with the running state of the engine.

11. The method according to claim 10, wherein the engine includes an exhaust gas recirculation passage (33) connecting an exhaust passage (20) to an intake passage (19) downstream from a throttle valve (24); and an exhaust gas recirculation valve (34), which changes a recirculation amount of an exhaust gas flowing through the exhaust gas recirculation passage, the method further including:

closing (S175) the exhaust gas recirculation valve, after starting the engine, when the out-of-range abnormality occurs;

obtaining (S175) an estimated suction pressure (PIMCAL) based on the running state of the engine; and

specifying (S180, S185, S190) an abnormal pressure sensor based on a difference between the estimated suction pressure and the detected suction pressure.

12. The method according to claim 11, wherein the step of specifying includes:

judging (S185) that the suction pressure sensor is abnormal, when the difference between the estimated suction pressure and the detected suction pressure is larger than a predetermined abnormality judgment value; and

judging (S190) that the atmospheric pressure sensor is abnormal, when the difference is not more than the abnormality judgment value.

13. A method for detecting abnormalities of a suction pressure sensor and an atmospheric pressure sensor, which are provided in an engine (11) including an exhaust gas recirculation passage (33) connecting an exhaust passage (20) to an intake passage (19) downstream from a throttle valve (24) in order to recirculation an exhaust gas of the engine (11) to the intake passage; an exhaust gas recirculation valve (34) for changing a recirculation amount of the exhaust gas flowing through the exhaust gas recirculation passage; the suction pressure sensor for detecting a suction pressure at downstream from the throttle valve in the intake passage; and the atmospheric pressure sensor for detecting an atmospheric pressure, the method being **characterized by** the steps of:

calculating (S130) a difference of detected pressures of the suction pressure sensor and the atmospheric pressure sensor, before an output shaft (17) of the engine starts to be rotated;
comparing (S130) the difference with a predetermined allowable value;
judging (S135) that either one of the suction pressure sensor and the atmospheric pressure sensor has an out-of-range abnormality, when the difference is larger than the allowable value;
driving (S175) at least one of the exhaust gas recirculation valve and the throttle valve, after starting the engine, when the out-of-range abnormality occurs; and
specifying (S180, S185, S190) an abnormal pressure sensor based on a change amount of the detected suction pressure of the suction pressure sensor before and after the driving.

14. The method according to claim 13, wherein the step of driving includes:

closing (S230) the exhaust gas recirculation valve and stopping the recirculation of the exhaust gas, when the throttle valve closes the intake passage, the engine is in an idle state, and an exhaust gas recirculating execution condition is satisfied; and
opening (S235) the throttle valve, when the engine is in the idle state, and the exhaust gas recirculating execution condition is not satisfied.

15. The method according to claim 13, wherein the specifying step includes:

calculating (S255) the difference of the suction pressures detected before and after the driving of at least one of the exhaust gas recirculation valve and the throttle valve;
judging (S260) that the suction pressure sensor is abnormal, when the difference is not more than a predetermined change judgment value; and
judging (S265) that the atmospheric pressure sensor is abnormal, when the difference is larger than the change judgment value.

16. The method according to claim 15, further includes waiting (S250) for a predetermined time, after the driving step of at least one of the exhaust gas recirculation valve and the throttle valve, and before the step of calculating the difference of the detected suction pressures.

**Patentansprüche**

1. Gerät (100) zum Bestimmen von Fehlern, das Fehler einer Vielzahl von Drucksensoren (40, 41) zum Feststellen von Luftdrücken erfaßt, die einem Motor (11) als Steuerparameter dienen, **gekennzeichnet durch**:

einen Vergleicher, der festgestellte Drücke zweier vorbestimmter Drucksensoren der Vielzahl von Drucksensoren (40, 41) miteinander vergleicht, um eine Differenz der festgestellten Drücke der beiden Sensoren zu erfassen, bevor eine Abtriebswelle (17) des Motors zu rotieren beginnt; und
eine Steuerung (42), die bestimmt, daß eine Eigenschaft entweder eines Drucksensors der beiden Drucksensoren einen den Wertebereich verlassenden Fehler aufweist, wenn die Differenz der festgestellten Drücke einen vorbestimmten zulässigen Wert übersteigt, wobei die Steuerung die festgestellten Drücke der beiden Sensoren daran hindert, als Steuerparameter des Motors zu dienen, und einen Steuerparameter ($\alpha$, $\gamma$) zur Verwendung anstelle des festgestellten Drucks wenigstens eines der Drucksensoren gemäß einem Laufzustand des Motors einstellt, wenn der den Wertebereich verlassende Fehler festgestellt ist.

2. Gerät zum Bestimmen von Fehlern des Drucksensors nach Anspruch 1, zu dessen Drucksensoren ein Saugdrucksensor (40) gehört, der Ansaugdruck in einem Ansaugkanal (19) stromabwärts von einem Drosselventil (24) feststellt, und ein Luftdrucksensor (41), der den Luftdruck feststellt.

3. Gerät zum Bestimmen von Fehlern nach Anspruch 2, dessen Motor über einen Abgasrückführkanal (33) verfügt, der einen Abgaskanal (20) mit dem Ansaugkanal (19) stromabwärts von einem Drosselventil (24) verbindet, und über ein Abgasrückführventil (34), das eine Rückführmenge des durch den Abgasrückführkanal strömenden Abgases variiert, und dessen Steuerung das Abgasrückführventil nach Starten des Motors zum Schließen veranlaßt, auf der Grundlage des Laufzustands vom Motor einen geschätzten Ansaugdruck (PIMCAL) erzielt und einen fehlerhaften Drucksensor auf der Grundlage der Differenz zwischen dem geschätzten Ansaugdruck und dem festgestellten Ansaugdruck spezifiziert, wenn der den Wertebereich verlassende Fehler erkannt ist.

4. Gerät zum Bestimmen von Fehlern nach Anspruch 3, bei dem die Steuerung bestimmt, daß der Ansaugdrucksensor fehlerhaft arbeitet, wenn die Differenz zwischen dem geschätzten Ansaugdruck (PIMCAL) und dem festgestellten Ansaugdruck (PIM) einen vorbestimmten Fehlerbeurteilungswert übersteigt, und bestimmt, daß der Sensor für den Luftdruck fehlerhaft ist, wenn die Differenz den Fehlerbeurteilungswert nicht übersteigt.

5. Gerät zum Bestimmen von Fehlern nach Anspruch 3 oder 4, bei dem die Steuerung den Laufzustand des Motors auf der Grundlage des Öffnungsgrads vom Drosselventil und einer Motordrehgeschwindigkeit (NE) steuert und den Ansaugdruck schätzt.

6. Gerät zum Bestimmen von Fehlern nach einem der Ansprüche 3 bis 5, bei dem die Steuerung den Ansaugdruck schätzt, wenn das Drosselventil den Ansaugkanal sperrt und der Motor im Ruhezustand ist.

7. Gerät zum Bestimmen von Fehlern, das Fehler eines Ansaugdrucksensors und eines Luftdrucksensors eines Motors (11) feststellt, wobei der Motor ausgestattet ist mit: einem Abgasrückführkanal (33), der einen Abgaskanal (20) mit einem Ansaugkanal (19) stromabwärts von einem Drosselventil (24) zur Rückführung von Abgas des Motors (11) zum Ansaugkanal enthält; einem Abgasrückführventil (34) zum Ändern einer Rückführmenge des durch den Abgasrückführkanal strömenden Abgases; dem Ansaugdrucksensor zum Feststellen eines Ansaugdrucks stromabwärts vom Drosselventil im Ansaugkanal; und dem Luftdrucksensor zum Feststellen des Luftdrucks, **gekennzeichnet durch**:

   einen Vergleicher, der die festgestellten Drücke des Ansaugdrucksensors und des Luftdrucksensors miteinander vergleicht, um die Differenz der festgestellten Drücke zu erfassen, bevor eine Abtriebswelle (17) des Motors sich zu drehen beginnt; und
   eine Steuerung (42), die bestimmt, daß die Eigenschaft entweder des Ansaugdrucksensors oder des Luftdrucksensors einen den Wertebereich verlassenden Fehler aufweist, wenn die Differenz der festgestellten Drücke einen vorbestimmten zulässigen Wert übersteigt, wobei die Steuerung wenigstens entweder das Abgasrückführventil oder das Drosselventil nach Maschinenstart ansteuert und einen fehlerhaften Drucksensor auf der Grundlage der Änderungsmenge des festgestellten Ansaugdrucks vom Ansaugdrucksensor vor und nach der Ansteuerung spezifiziert, wenn der den Wertebereich verlassenden Fehler festgestellt ist.

8. Gerät zum Bestimmen von Fehlern nach Anspruch 7, bei dem die Steuerung das Abgasrückführventil nur dann öffnet, wenn der Laufzustand des Motors einer vorbestimmten Abgasrückführbedingung entspricht, wobei die Steuerung das Abgasrückführventil zum Schließen veranlaßt und die Rückführung des Abgases stoppt, wenn das Drosselventil den Ansaugkanal sperrt, wobei der Motor in Ruhezustand ist und der Rückführbedingung genügt, und wobei die Steuerung das Öffnen des Drosselventils veranlaßt, wenn der Motor im Ruhezustand ist und der Gasrückführbedingung nicht genügt.

9. Gerät zum Bestimmen von Fehlern nach Anspruch 7 oder 8, wobei die Steuerung die Differenz zwischen dem vor und nach dem Ansteuern wenigstens entweder des Abgasrückführventils oder des Drosselventils festgestellten Ansaugdruck bestimmt, daß der Ansaugdrucksensor fehlerhaft ist, wenn die Differenz einen vorbestimmten Beurteilungswert nicht übersteigt, und bestimmt, daß der Sensor für den Luftdruck fehlerhaft ist, wenn die Differenz den Beurteilungswert übersteigt.

10. Verfahren zum Bestimmen von Fehlern einer Vielzahl von Drucksensoren (40, 41) zum Feststellen mehrerer Drücke bezüglich eines Laufzustands eines Motors (11), mit den Verfahrensschritten:

    Berechnen (S130) einer Differenz zwischen festgestellten Drücken zweier vorbestimmter Drucksensoren unter der Vielzahl von Drucksensoren (40, 41), bevor eine Abtriebswelle (17) des Motors sich zu drehen beginnt;
    Vergleichen (S130) der Differenz festgestellten Druckes mit einem vorbestimmten zulässigen Wert;
    Beurteilen (S135), daß einer der beiden Drucksensoren einen den Wertebereich verlassenden Fehler aufweist, wenn die Differenz der festgestellten Drücke den zulässigen Wert übersteigt;
    Unterbinden (S135) der Verwendung von Drücken der beiden Drucksensoren als Steuerparameter des Motors; und

Einstellen (S140) eines Steuerparameters ($\alpha$, $\gamma$) zur Verwendung anstelle des festgestellten Drucks wenigstens eines der Drucksensoren gemäß dem Laufzustand des Motors.

11. Verfahren nach Anspruch 10, bei dem der Motor über einen Abgasrückführkanal (33) verfügt, der einen Abgaskanal (20) mit einem Ansaugkanal (19) stromabwärts von einem Drosselventil (24) verbindet; und über einen Abgasrückführkanal (34), der eine durch den Abgasrückführkanal strömende Abgasrückführmenge variiert, mit den weiteren Verfahrensschritten:

Schließen (S175) vom Abgasrückführventil nach Starten des Motors, wenn der den Wertebereich verlassende Fehler auftritt;
Gewinnen (S175) eines geschätzten Ansaugdrucks (PIMCAL) auf der Grundlage des Laufzustands vom Motor; und
Spezifizieren (S180, S185, S190) eines fehlerhaften Drucksensors auf der Grundlage der Differenz zwischen dem geschätzten Ansaugdruck und dem festgestellten Ansaugdruck.

12. Verfahren nach Anspruch 11, bei dem der Verfahrensschritt des Spezifizierens weiterhin umfaßt:

Beurteilen (S185), daß der Ansaugdrucksensor fehlerhaft ist, wenn die Differenz zwischen dem geschätzten Ansaugdruck und dem festgestellten Ansaugdruck einen vorbestimmten Fehlerbeurteilungswert übersteigt; und
Beurteilen (S190), daß der Luftdrucksensor fehlerhaft ist, wenn die Differenz den Fehlerbeurteilungswert nicht übersteigt.

13. Verfahren zum Bestimmen von Fehlern eines Ansaugdrucksensors und eines Luftdrucksensors, die in einem Motor (11) bereitstehen, der ausgestattet ist mit: einem Abgasrückführkanal (33), der einen Abgaskanal (20) mit einem Ansaugkanal (19) stromabwärts von einem Drosselventil (24) verbindet, um die Abgasrückführung vom Motor (11) zum Ansaugkanal zu bewirken; einem Abgasrückführventil (34) zum Ändern einer Rückführmenge des den Absauggasrückführkanal durchströmenden Abgases; dem Ansaugdrucksensor zum Feststellen eines Ansaugdrucks auf der Stromabwärtsseite vom Drosselventil in den Ansaugkanal; und dem Luftdrucksensor zum Feststellen des Luftdrucks,
**gekennzeichnet durch** die Verfahrensschritte:

Berechnen (S130) einer Differenz zwischen den festgestellten Drücken vom Ansaugdrucksensor und dem Luftdrucksensor, bevor eine Abtriebswelle (17) des Motors zu drehen beginnt;
Vergleichen (S130) der Differenz mit einem vorbestimmten zulässigen Wert;
Beurteilen (S135), daß entweder der Ansaugdrucksensor oder der Luftdrucksensor einen den Wertebereich verlassenden Fehler aufweist, wenn die Differenz einen zulässigen Wert übersteigt;
Ansteuern (S175) wenigstens entweder des Abgasrückführventils oder des Drosselventils nach Starten des Motors, wenn der den Wertebereich verlassenden Fehler auftritt; und
Spezifizieren (S180, S185, S190) eines fehlerhaften Drucksensors auf der Grundlage eines Änderungsbetrags des festgestellten Ansaugdrucks vom Ansaugdrucksensor vor und nach dem Ansteuern.

14. Verfahren nach Anspruch 13, dessen Ansteuerschritt folgendes umfaßt:

Schließen (S230) vom Abgasrückführventil und Stoppen des Rückführens vom Abgasrückführventil und Stoppen der Abgasrückführung, wenn das Drosselventil den Ansaugkanal sperrt, wobei der Motor in einem Ruhezustand ist und einer Abgasrückführbedingung genügt; und
Öffnen (S235) des Drosselventils, wenn der Motor im Ruhezustand ist und der Abgasrückführbedingung nicht genügt.

15. Verfahren nach Anspruch 13, dessen Spezifizierungsschritt folgende Verfahrensschritte umfaßt:

Berechnen (S255) der Differenz der vor und nach dem Ansteuern wenigstens entweder des Abgasrückführventils oder des Drosselventils festgestellten Ansaugdrücke;
Beurteilen (S260), daß der Ansaugdrucksensor fehlerhaft ist, wenn die Differenz einen vorbestimmten Änderungsbeurteilungswert nicht übersteigt; und
Beurteilen (S265), daß der Luftdrucksensor fehlerhaft ist, wenn die Differenz den Änderungsbeurteilungswert übersteigt.

**16.** Verfahren nach Anspruch 15, mit dem weiteren Verfahrensschritt des Wartens (S250) während einer vorbestimmten Zeit nach dem Ansteuerschritt wenigstens entweder des Abgasrückführventils oder des Drosselventils und vor dem Verfahrensschritt des Berechnens der Differenz der festgestellten Ansaugdrücke.

**Revendications**

**1.** Dispositif de détection d'anomalies (100) qui détecte des anomalies d'une pluralité de capteurs de pression (40, 41) destinés à détecter des pressions d'air qui sont utilisées en tant que paramètres de commande d'un moteur (11), le dispositif étant **caractérisé par** :

un comparateur qui compare des pressions détectées de deux capteurs de pression prédéterminés dans la pluralité de capteurs de pression (40, 41) l'une à l'autre afin d'obtenir une différence des pressions détectées des deux capteurs de pression, avant qu'un arbre de sortie (17) du moteur ne commence à être tourné ; et un contrôleur (42) qui détermine qu'une propriété de l'un ou l'autre capteur de pression des deux capteurs de pression présente une anomalie de dépassement de capacité lorsque la différence des pressions détectées est supérieure à une valeur admissible prédéterminée, dans lequel le contrôleur interdit aux pressions détectées des deux capteurs de pression d'être utilisées en tant que les paramètres de commande du moteur, et définit un paramètre de commande ($\alpha$, $\gamma$) à utiliser à la place de la pression détectée d'au moins l'un des capteurs de pression en fonction d'un état de fonctionnement du moteur lorsque l'anomalie de dépassement de capacité est détectée.

**2.** Dispositif de détection d'anomalies du capteur de pression selon la revendication 1, dans lequel la pluralité de capteurs de pression incluent un capteur de pression d'aspiration (40) destiné à détecter une pression d'aspiration dans un passage d'admission (19) en aval d'un papillon des gaz (24) et un capteur de pression atmosphérique (41) destiné à détecter une pression atmosphérique.

**3.** Dispositif de détection d'anomalies selon la revendication 2, dans lequel le moteur possède un passage de recirculation des gaz d'échappement (33) qui connecte un passage d'échappement (20) et le passage d'admission (19) en aval d'un papillon des gaz (24), et une soupape de recirculation des gaz d'échappement (34) qui modifie une quantité de recirculation d'un gaz d'échappement circulant à travers le passage de recirculation des gaz d'échappement, et le contrôleur oblige la soupape de recirculation des gaz d'échappement à se fermer après le démarrage du moteur, obtient une pression d'aspiration estimée (PIMCAL) sur la base de l'état de fonctionnement du moteur, et spécifie un capteur de pression anormal sur la base de la différence entre la pression d'aspiration estimée et la pression d'aspiration détectée, lorsque l'anomalie de dépassement de capacité est détectée.

**4.** Dispositif de détection d'anomalies selon la revendication 3, dans lequel le contrôleur détermine que le capteur de pression d'aspiration est anormal lorsque la différence entre la pression d'aspiration estimée (PINCAL) et la pression d'aspiration détectée (PIM) est supérieure à une valeur d'évaluation d'anomalie prédéterminée, et détermine que le capteur de pression atmosphérique est anormal lorsque la différence n'est pas supérieure à la valeur d'évaluation d'anomalie.

**5.** Dispositif de détection d'anomalies selon la revendication 3 ou 4, dans lequel le contrôleur détermine l'état de fonctionnement du moteur sur la base d'un degré d'ouverture du papillon des gaz et d'une vitesse de rotation du moteur (NE), et le contrôleur estime la pression d'aspiration.

**6.** Dispositif de détection d'anomalies selon l'une quelconque des revendications 3 à 5, dans lequel le contrôleur estime la pression d'aspiration lorsque le papillon des gaz ferme le passage d'admission et le moteur est dans un état ralenti.

**7.** Dispositif de détection d'anomalies qui détecte des anomalies d'un capteur de pression d'aspiration et un capteur de pression atmosphérique d'un moteur (11), dans lequel le moteur inclut : un passage de recirculation des gaz d'échappement (33) reliant un passage d'échappement (20) et un passage d'admission (19) en aval d'un papillon des gaz (24) destiné à recirculer un gaz d'échappement du moteur (11) vers le passage d'admission ; une soupape de recirculation des gaz d'échappement (34) destinée à modifier une quantité de recirculation des gaz d'échappement circulant à travers le passage de recirculation des gaz d'échappement ; le capteur de pression d'échappement destiné à détecter une pression d'aspiration en aval du papillon des gaz dans le passage d'admission ; et le capteur de pression atmosphérique destiné à détecter une pression atmosphérique, le dispositif étant **caractérisé par** :

un comparateur qui compare des pressions détectées du capteur de pression d'aspiration et du capteur de pression atmosphérique l'une à l'autre afin d'obtenir une différence des pressions détectées, avant qu'un arbre de sortie (17) du moteur ne commence à être tourné ; et

un contrôleur (42) qui détermine qu'une propriété de l'un ou l'autre du capteur de pression d'aspiration et du capteur de pression atmosphérique présente une anomalie de dépassement de capacité, lorsque la différence des pressions détectées est supérieure à une valeur admissible prédéterminée, dans lequel le contrôleur entraîne au moins l'un de la soupape de recirculation des gaz d'échappement et du papillon des gaz après le démarrage du moteur, et spécifie un capteur de pression anormal sur la base d'une quantité de changement de la pression d'aspiration détectée du capteur de pression d'aspiration avant et après l'entraînement, lorsque l'anomalie de dépassement de capacité est détectée.

**8.** Dispositif de détection d'anomalies selon la revendication 7, dans lequel le contrôleur ouvre la soupape de recirculation des gaz d'échappement, seulement lorsque l'état de fonctionnement du moteur remplit une condition d'exécution de recirculation des gaz d'échappement prédéterminée, le contrôleur oblige la soupape de recirculation des gaz d'échappement à se fermer et arrête la recirculation des gaz d'échappement, lorsque le papillon des gaz ferme le passage d'admission, le moteur est dans un état ralenti, et la condition d'exécution de recirculation des gaz d'échappement est remplie, et le contrôleur oblige le papillon des gaz à s'ouvrir, lorsque le moteur est dans l'état ralenti et la condition d'exécution de recirculation des gaz d'échappement n'est pas remplie.

**9.** Dispositif de détection d'anomalies selon la revendication 7 ou 8, dans lequel le contrôleur calcule la différence des pressions d'aspiration détectées avant et après l'entraînement d'au moins l'un de la soupape de recirculation des gaz d'échappement et du papillon des gaz, détermine que le capteur de pression d'aspiration est anormal, lorsque la différence n'est pas supérieure à une valeur d'évaluation prédéterminée, et détermine que le capteur de pression atmosphérique est anormal, lorsque la différence est supérieure à la valeur d'évaluation.

**10.** Procédé de détection d'anomalies d'une pluralité de capteurs de pression (40, 41) destinés à détecter une pluralité de pressions d'air relatives à un état de fonctionnement d'un moteur (11), le procédé étant **caractérisé par** les étapes consistant à :

calculer (S130) une différence des pressions détectées de deux capteurs de pression prédéterminés dans la pluralité de capteurs de pression (40, 41), avant qu'un arbre de sortie (17) du moteur ne commence à être tourné ;
comparer (S130) la différence des pressions détectées avec une valeur admissible prédéterminée ;
évaluer (S135) que l'un ou l'autre des deux capteurs de pression présente une anomalie de dépassement de capacité, lorsque la différence des pressions détectées est supérieure à la valeur admissible ;
interdire (S135) aux pressions détectées des deux capteurs de pression d'être utilisées en tant que paramètres de commande du moteur ; et
définir (S140) un paramètre de commande ($\alpha$, $\gamma$) à utiliser à la place de la pression détectée d'au moins l'un des capteurs de pression en fonction d'un état de fonctionnement du moteur.

**11.** Procédé selon la revendication 10, dans lequel le moteur inclut un passage de recirculation des gaz d'échappement (33) reliant un passage d'échappement (20) à un passage d'admission (19) en aval d'un papillon des gaz (24) ; et une soupape de recirculation des gaz d'échappement (34), qui modifie une quantité de recirculation des gaz d'échappement circulant à travers le passage de recirculation des gaz d'échappement, le procédé comprenant en outre :

la fermeture (S175) de la soupape de recirculation des gaz d'échappement, après le démarrage du moteur, lorsque l'anomalie de dépassement de capacité se produit ;
l'obtention (S175) d'une pression d'aspiration estimée (PIMCAL) sur la base de l'état de fonctionnement du moteur ; et
la spécification (S180, S185, S190) d'un capteur de pression anormal sur la base d'une différence entre la pression d'aspiration estimée et la pression d'aspiration détectée.

**12.** Procédé selon 1a revendication 11, dans lequel l'étape de spécification comprend :

l'évaluation (S185) que le capteur de pression d'aspiration est anormal, lorsque la différence entre la pression d'aspiration estimée et la pression d'aspiration détectée est supérieure à une valeur d'évaluation d'anomalie prédéterminée ; et
l'évaluation (S190) que le capteur de pression atmosphérique est anormal, lorsque la différence n'est pas supérieure à la valeur d'évaluation d'anomalie.

**13.** Procédé de détection d'anomalies d'un capteur de pression d'aspiration et d'un capteur de pression atmosphérique, qui sont prévus dans un moteur (11) incluant un passage de recirculation des gaz d'échappement (33) reliant un passage d'échappement (20) à un passage d'admission (19) en aval d'un papillon des gaz (24) destiné à la recirculation d'un gaz d'échappement du moteur (11) vers le passage d'admission ; une soupape de recirculation des gaz d'échappement (34) destinée à modifier une quantité de recirculation des gaz d'échappement circulant à travers le passage de recirculation des gaz d'échappement ; le capteur de pression d'aspiration destiné à détecter une pression d'aspiration en aval du papillon des gaz dans le passage d'admission ; et le capteur de pression atmosphérique destiné à détecter une pression atmosphérique, le procédé étant **caractérisé par** les étapes consistant à :

calculer (S130) une différence des pressions détectées du capteur de pression d'aspiration et du capteur de pression atmosphérique, avant qu'un arbre de sortie (17) du moteur ne commence à être tourné ;
comparer (S130) la différence avec une valeur admissible prédéterminée ;
évaluer (S135) que l'un ou l'autre du capteur de pression d'aspiration et du capteur de pression atmosphérique présente une anomalie de dépassement de capacité, lorsque la différence est supérieure à la valeur admissible ;
entraîner (S175) au moins l'un de la soupape de recirculation des gaz d'échappement et du papillon des gaz, après le démarrage du moteur, lorsque l'anomalie de dépassement de capacité se produit ; et
spécifier (S180, S185, S190) un capteur de pression anormal sur la base d'une quantité de changement de la pression d'aspiration détectée du capteur de pression d'aspiration avant et après l'entraînement.

**14.** Procédé selon la revendication 13, dans lequel l'étape d'entraînement inclut :

la fermeture (S230) de la soupape de recirculation des gaz d'échappement et la fermeture de la recirculation des gaz d'échappement, lorsque le papillon des gaz ferme le passage d'admission, le moteur est dans un état ralenti, et une condition d'exécution de recirculation des gaz d'échappement est remplie ; et
l'ouverture (S235) du papillon des gaz, lorsque le moteur est dans l'état ralenti, et la condition d'exécution de recirculation des gaz d'échappement n'est pas remplie.

**15.** Procédé selon la revendication 13, dans lequel l'étape de spécification inclut ;
le calcul (S255) de la différence des pressions d'aspiration détectées avant et après l'entraînement d'au moins l'un de la soupape de recirculation des gaz d'échappement et du papillon des gaz ;
l'évaluation (S260) que le capteur de pression d'aspiration est anormal, lorsque la différence n'est pas supérieure à une valeur d'évaluation de changement prédéterminée ; et
l'évaluation (S265) que le capteur de pression atmosphérique est anormal, lorsque la différence est supérieure à la valeur d'évaluation de changement.

**16.** Procédé selon la revendication 15, comprenant en outre l'attente (S250) pendant un temps prédéterminé, après l'étape d'entraînement d'au moins l'un de la soupape de recirculation des gaz d'échappement et du papillon des gaz, et avant l'étape de calcul de la différence des pressions d'aspiration détectées.

Fig.1

# Fig.2

```
                    ┌─────────────────┐
                    │   Abnormality   │
                    │ detection routine│
                    └────────┬────────┘
                             │
    S100                     ▼
              ◇ Detection ◇────NO────▶ (1)
              ◇ completion flag ◇
              ◇    =0?    ◇
                    │ YES
    S105            ▼
              ◇  Starter  ◇────NO────▶ (2)
              ◇ on flag=0 and ◇
              ◇  NE=NE(0)  ◇
              ◇     ?     ◇
                    │ YES
    S115            ▼
              ┌──────────────┐
              │  PA←paad     │
              │  PIM←pimad   │
              └──────┬───────┘
    S120             ▼
              ◇ PAL<PA<PAH? ◇────NO─────────────────────┐
                    │ YES                                 │      S145
    S125            ▼                              ┌──────────────┐
              ◇ PIML<PIM<PIMH? ◇──NO──┐            │ PA abnormality│
                    │ YES             │            │   flag←1     │
    S130            ▼                 ▼            └──────┬───────┘
              ◇ |PA-PIM|  ◇──NO──┐  S150                 │
              ◇ >allowable ◇     │  ┌──────────────┐     │
              ◇   value?  ◇      │  │ PIM abnormality│    │
    S135            │ YES        │  │   flag←1     │     │
              ┌──────────────┐   │  └──────┬───────┘     │
              │Range abnormality│  │         │            │
              │   flag←1      │   │         ▼            │
              └──────┬───────┘   │  S155                │
    S140             ▼           │  ┌──────────────┐     │
              ┌──────────┐       │  │ PA normality flag←1│  │
              │  PA←α    │       │  │ PIM normality flag←1│ │
              └──────┬───┘       │  └──────┬───────┘     │
                     │           │         ▼          (3)│
                     │           └─────▶┌──────────────┐ │
                     │                  │Detection completion│ S160
                     │                  │   flag←1     │
                     │                  └──────┬───────┘
                     │                         ▼       (1)
                     ◀─────────────────────────┘
                     ▼
              ┌──────────┐
              │  Return  │
              └──────────┘
```

## Fig.3

② ↓

S165 ─ ◇ Range abnormality flag=1? ──NO──→

↓YES

S170 ─ ◇ Idle state ? ──NO──→ ①

↓YES

S175 ─ | Forcibly cut EGR and calculate PIMCAL |

↓

S180 ─ ◇ |PIM-PIMCAL| >abnormality judgment value ? ──NO──→

↓YES

S185 ─ | PIM abnormality flag←1 |    S190 ─ | PA abnormality flag←1 |

↓

③

## Fig.4

(High)

VH - - - - - - - - - - - - - - - - - -

Output Voltage V

L3  L1
    L2
    L4

VL - - - - - - - - - - - - - - - - - -
(Low)

(Low) ────── Pressure ────── (High)

# Fig.5

(2)

S200 — Range abnormality flag=1?

YES

S205 — Idle state ? — NO

YES

S210 — Initial learning flag←0, Clear continuance counter

(1)

S215 — Initial learning flag =0? — NO

YES

PIMB←PIM — S220

S245 — Increment continuance counter

S225 — EGR execution condition established ? — NO

YES

S230 — Forcibly cut EGR

S235 — Open throttle value

S240 — Initial learning flag←1

(4)

# Fig.6

④

S250

Continuance
counter>β
?

→ NO → ①

↓ YES

S255

| PIM-PIMB |
<change judgment
value?

→ NO

↓ YES

S260 — YES

PIM abnormality
flag←1

S265 —

PA abnormality
flag←1

③